Europäisches Patentamt

European Patent Office

Office européen des brevets

(11) Veröffentlichungsnummer: **0 228 542**
**B1**

(12) **EUROPÄISCHE PATENTSCHRIFT**

(45) Veröffentlichungstag der Patentschrift:
**27.09.89**

(51) Int. Cl.⁴: **D04B 15/48, F16H 7/02**

(21) Anmeldenummer: **86115533.1**

(22) Anmeldetag: **08.11.86**

(54) Riemenantriebsvorrichtung, beispielsweise für Fadenliefervorrichtungen für Textilmaschinen.

(30) Priorität: **06.12.85 DE 3543183**

(43) Veröffentlichungstag der Anmeldung:
**15.07.87 Patentblatt 87/29**

(45) Bekanntmachung des Hinweises auf die Patenterteilung:
**27.09.89 Patentblatt 89/39**

(84) Benannte Vertragsstaaten:
**ES GB IT SE**

(56) Entgegenhaltungen:
**DE-A- 3 307 007**
**FR-A- 1 096 002**
**FR-A- 2 227 365**
**FR-A- 2 408 674**

(73) Patentinhaber: **SIPRA Patententwicklungs- und
Beteiligungsgesellschaft mbH, Emil-Mayer-Strasse 10,
D-7470 Albstadt 2-Tailfingen(DE)**

(72) Erfinder: **Plath, Ernst-Dieter, Im Weglanger 5,
D-7470 Albstadt 2-Tailfingen(DE)**

(74) Vertreter: **Möbus, Rudolf, Dipl.-Ing.,
Hindenburgstrasse 65, D-7410 Reutlingen(DE)**

**Beschreibung**

Die Erfindung betrifft eine Riemenantriebsvorrichtung, beispielsweise für Fadenliefervorrichtungen für Textilmaschinen, mit mindestens einem endlosen angetriebenen Riemen und mindestens einer Abtriebswelle, die mit einer Riemenscheibe kuppelbar ist, über welche der Riemen geführt ist und mit welcher der Riemen gleichzeitig bereichsweise eine formschlüssige und bereichsweise eine nur reibungsschlüssige Verbindung hat.

Eine Riemenantriebsvorrichtung der eingangs genannten Art ist beispielsweise aus der DE-PS 23 65 251 und aus dem DE-GM 74 19 793 bekannt. Dort sind flache Antriebsriemen verwendet, die in der Mitte mit einer Lochreihe versehen sind, in welche die Stifte eines auf der Riemenscheibe ausgebildeten mittleren Stiftkranzes eingreifen und einen Formschluß zwischen Riemen und Riemenscheibe bewirken, während die Randbereiche des Flachriemens auf den glatten Randbereichen der Riemenscheibe anliegen und dort Reibungsschluß mit der Riemenscheibe haben. Der mit einer Lochscheibe versehene Flachriemen hat den Vorteil, daß er aus einem Riemenstück durch Verbinden der beiden Riemenenden miteinander zu einem endlosen Riemen geformt werden kann, was bei Zahnriemen, wie sie beispielsweise aus der DE-OS 25 31 378 bekannt sind, und die eine ausschließlich formschlüssige Antriebsverbindung zwischen Riemen und über die volle Breite gezahnter Riemenscheibe ergeben, nicht möglich ist. Die voll gezahnten Antriebsriemen müssen bereits als endlose Riemen, genau auf eine gewünschte Länge abgestimmt, hergestellt werden.

Bei den Antriebsriemen, wie dem erwähnten Lochriemen, bei welchen gleichzeitig bereichsweise eine formschlüssige und bereichsweise eine nur reibungsschlüssige Verbindung zwischen Riemen und Riemenscheibe besteht, hat sich aber herausgestellt, daß häufig ein unerwartetes Abspringen des Riemens von der Riemenscheibe auftritt, wobei die Häufigkeit dieser Erscheinung mit zunehmender Laufgeschwindigkeit des Riemens und mit zunehmender Größe des Riemenumschlingungsbereiches auf einer Riemenscheibe zunimmt. Eine Untersuchung der Riemen, die eine Abspringtendenz zeigten, hat ergeben, daß die Ursache in einer nur geringfügigen und über die Zeit kaum vermeidbaren Längung des Antriebsriemens zu suchen ist, durch welche Längung die Lochteilung oder eine Randzahnteilung eines Riemens nicht mehr mit der Teilung der zugeordneten Formschlußvorsprünge oder -ausnehmungen der Riemenscheibe übereinstimmen. Eine Anpassung der Riemenscheibe an die Bewegung des leicht gelängten Antriebsriemens ist aber wegen der gleichzeitigen reibungsschlüssigen Verbindung des Riemens mit der Riemenscheibe nicht möglich.

Der Erfindung liegt die Aufgabe zugrunde, einen Riemenantriebsvorrichtung zu schaffen, bei welcher weiterhin ein schlupffreier Antrieb mit einem endlosen Riemen gewährleistet ist, der sich aus einem geradlinigen Riemenstück durch Verbindung der Riemenenden herstellen läßt, bei welchem aber ein Abspringen des normal belasteten Riemens vermieden ist.

Die gestellte Aufgabe wird mit einer Riemenantriebsvorrichtung der eingangs genannten Art dadurch gelöst, daß der nur einen Reibungsschluß mit dem Riemen ergebende Bereich oder diese Bereiche der Riemenscheibe gegenüber dem einen Formschluß mit dem Riemen ergebenden Bereich oder diesen Bereichen der Riemenscheibe relativverdrehbar ausgebildet ist bzw. sind.

Bei einer erfindungsgemäß ausgebildeten Riemenantriebsvorrichtung wird - unabhängig von der Ausbildung und Verteilung der einen Formschluß und der nur einen Reibungsschluß ergebenden Bereiche des Riemens - erreicht, daß eine Reibungsschlußverbindung des Riemens mit der Riemenscheibe die Formschlußverbindung des Riemens mit der Riemenscheibe nicht mehr stören kann. Hierbei kann die Reibungsschlußverbindung des Antriebsriemens mit einer Riemenscheibe in seiner Wirkung entweder ganz ausgeschaltet werden, indem der oder die eine glatte Anlagefläche für den Riemen aufweisende Teil oder Teile der Riemenscheibe frei drehbar gelagert werden, oder in ihrer Wirkung nur vermindert werden, indem der oder die eine glatte Anlagefläche für den Riemen aufweisende Teil oder Teile der Riemenscheibe gebremst drehbar gelagert sind. Die Lagerung dieser Teile erfolgt hierbei zweckmäßig ebenfalls auf der Abtriebswelle, mit welcher nur der oder die, Ausnehmungen und/oder Vorsprünge aufweisende Breitenbereich oder Breitenbereiche einer abtriebsseitigen Riemenscheibe drehfest verbunden oder kuppelbar ist bzw. sind.

Bei einer bevorzugten Ausführungsform einer erfindungsgemäß ausgebildeten Riemenantriebsvorrichtung weist der Antriebsriemen mindestens an seinem einen Längsrand eine durch regelmäßig angeordnete Randeinkerbungen gebildete Verzahnung auf, die in einen mit einer Abtriebswelle drehfest kuppelbaren, den Rand einer Riemenscheibe bildenden Zahnkranz eingreift, wobei der angrenzende, eine glatte Anlagefläche für den ungezahnten Teil des Antriebsriemens aufweisende koaxiale Teil der abtriebsseitigen Riemenscheibe ein gesondertes, gegenüber dem Zahnkranz verdrehbar gelagertes Bauteil bildet.

Eine erfindungsgemäß ausgebildete Riemenantriebsvorrichtung läßt sich auf vielen technischen Gebieten einsetzen. Ein wichtiges Anwendungsgebiet sind Fadenliefervorrichtungen für Textilmaschinen, bei welchen häufig gleichzeitig mehrere, mit unterschiedlichen Geschwindigkeiten umlaufende Antriebsriemen vorgesehen sind, die wahlweise jeweils mit mehreren Abtriebswellen über wahlweise mit der Abtriebswelle kuppelbare Riemenscheiben gekoppelt werden sollen. Bei solchen Riemenantriebsvorrichtungen können zweckmäßig der mit der Randverzahnung des Antriebsriemens zusammenwirkende Zahnkranz und der gesonderte, die glatte Riemenanlagefläche bildende Teil der Riemenscheibe gegeneinander und gegenüber der Abtriebswelle frei drehbar gelagert sein, wobei der Zahnkranz mit Kupplungsausnehmungen für die Kupplungsvorsprünge von mindestens einer axialverstellbaren drehfesten Kupplungsscheibe versehen ist.

Nachfolgend wird ein Ausführungsbeispiel einer erfindungsgemäß ausgebildeten Riemenantriebsvorrichtung für eine Fadenliefervorrichtung für Rundstrickmaschinen anhand der beiliegenden Zeichnung näher erläutert.

Im einzelnen zeigen:

Fig. 1 eine schematische Übersichtsdarstellung der Riemenantriebsvorrichtung;

Fig. 2 eine Seitenansicht des Antriebsteils einer Fadenliefervorrichtung mit zwei wahlweise mit einer Abtriebswelle kuppelbaren Riemenscheiben einer zwei endlos umlaufende Antriebsriemen aufweisenden Riemenantriebsvorrichtung, teilweise im Schnitt.

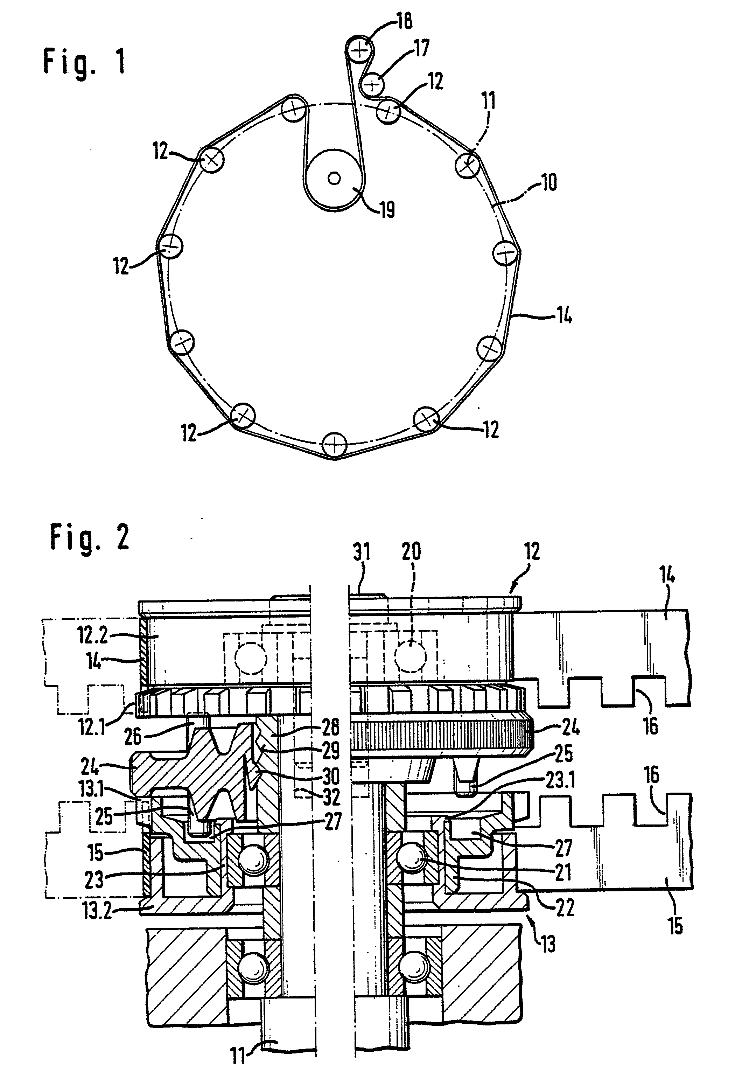

Fig. 1 zeigt eine Riemenantriebsvorrichtung, die elf Fadenliefervorrichtungen einer Rundstrickmaschine gemeinsam ist. Von den Fadenliefervorrichtungen interessiert nur ihr Antriebsteil, nicht der übrige Aufbau. Die elf einzelnen Fadenliefervorrichtungen sind an der Rundstrickmaschine auf einem mit strichpunktierten Linien angedeuteten Kreis 10 in gleichmäßigen Abständen angeordnet und weisen jeweils eine in Fig. 1 durch eine Kreisschnittstelle angedeutete Abtriebswelle 11 auf, mit welcher mindestens eine Riemenscheibe 12 kuppelbar ist. Beim gewählten Ausführungsbeispiel sind es pro Abtriebswelle 11 zwei Riemenscheiben 12 und 13, und weist die Riemenantriebsvorrichtung dementsprechend zwei Antriebsriemen 14 und 15 auf, von denen Fig. 1 nur den Antriebsriemen 14 zeigt. Beide Antriebsriemen 14 und 15 sind durch regelmäßig angeordnete Randeinkerbungen 16 mit einer Randverzahnung versehen und jeweils durch Verbinden der Riemenenden zu zwei endlosen Antriebsriemen ausgebildet.

Gemäß Fig. 1 ist der endlos ausgebildete Antriebsriemen 14 über die Riemenscheiben 12 aller Abtriebswellen 11 geführt, läuft über eine ortsfeste Umlenkrolle 17 und eine verstellbare Riemenspannrolle 18 und wird mittels eines Antriebsrades 19 mit einer gewünschten Antriebsgeschwindigkeit in Bewegung gesetzt. Das Antriebsrad 19 läßt sich in seinem Riemenauflagedurchmesser verstellen, wodurch eine Geschwindigkeitseinstellung möglich ist. Das Antriebsrad 19 kann auf einer Antriebswelle der Rundstrickmaschine oder auf der Welle eines gesonderten Antriebsmotors befestigt sein. Das gleiche gilt für den zweiten Antriebsriemen 15, dessen Antriebsrad auf der gleichen Antriebswelle oder aber auf einer anderen Antriebswelle angeordnet sein kann. Beide Antriebsriemen 14 und 15 liegen nur über einen kleinen Umschlingungswinkel an den Riemenscheiben 12 oder 13 an.

Wie aus Fig. 2 ersichtlich ist, sind beide Riemenscheiben 12 und 13 jeweils über ein Kugellager 20 und 21 frei drehbar auf der Abtriebswelle 11 gelagert. Die Riemenscheiben 12 und 13 sind genau gleich ausgebildet, nur unterschiedlich auf die Abtriebswelle 11 aufgesetzt. Sie sind in einen Zahnkranz 12.1, 13.1 und in einen Trommelteil 12.2, 13.2 geteilt. Der Zahnkranz 12.1, 13.1 bildet den einen Randbereich der Riemenscheibe 12, 13. Die Zahnkränze 12.1 und 13.1 wirken mit den Verzahnungen 16 der Antriebsriemen 14 und 15 zusammen. An der im zentralen Längsschnitt dargestellten Riemenscheibe 13 ist ersichtlich, daß der Zahnkranz 13.1 mit einem zentralen Lagerring 22 nach Art eines Gleitlagers auf einem Lagerhülsenteil 23 des Trommelteiles 13.2 angeordnet ist. Das Kugellager 21 ist in diesen Lagerhülsenteil 23 eingegossen. Der Zahnkranz 13.1 und der Trommelteil 13.2 der Riemenscheibe 13 und dementsprechend der Zahnkranz 12.1 und der Trommelteil 12.2 der Riemenscheibe 12 können sich also gegeneinander verdrehen. Durch einen kleinen Randflansch 23.1 des Lagerhülsenteiles 23 ist der Zahnkranz 13.1 an einer Axialverschiebung gegenüber dem Trommelteil 13.2 gehindert. Der Trommelteil 12.2, 13.2 bildet eine glatte Anlagefläche für den ungezahnten Teil des Antriebsriemens 14 oder 15.

Zwischen der Riemenscheibe 12 und der Riemenscheibe 13 ist eine axialverstellbare Kupplungsscheibe 24 angeordnet, die in der linken Hälfte der Fig. 2 im Schnitt und in einer unterschiedlichen Axialstellung als in der rechten Hälfte dargestellt ist. Die Kupplungsscheibe 24 ist auf beiden Stirnseiten mit Kupplungsvorsprüngen 25 und 26 versehen, die auf gleichen Durchmesserkreisen und in gleicher Verteilung wie Kupplungsausnehmungen 27 angeordnet sind, die in den Zahnkränzen 12.1 und 13.1 ausgebildet sind. Die Kupplungsscheibe 24 ist drehfest konzentrisch auf einem auf die Abtriebswelle 11 aufgeschobenen Kupplungsträger 28 angeordnet, der in aus Fig. 2 nicht ersichtlicher Weise an seinem Umfang als regelmäßiges Vieleck, beispielsweise regelmäßiges Sechseck, ausgebildet ist und auf einer dieser Außenseiten mit drei im linken Teil der Fig. 2 dargestellten Rastkerben 29 versehen ist, in welche eine federnde Rastnase 30 der Kupplungsscheibe 24 einrasten kann. Der Kupplungsträger 28 ist mittels einer Schraube 31, die in einer konzentrischen Gewindebohrung 32 im freien Ende der Abtriebswelle 11 verankert ist, zwischen die beiden Kugellager 20 und 21 eingespannt.

In der linken Hälfte der Fig. 2 befindet sich die Kupplungsscheibe 24 mit ihrer Rastnase 30 in der untersten der drei Rastkerben 29 des Kupplungsträgers 28. In dieser Stellung greifen die Kupplungsvorsprünge 25 der Kupplungsscheibe 24 in die Kupplungsausnehmungen 27 des Zahnkranzes 13.1 der Riemenscheibe 13 ein und bewirken somit eine drehfeste Koppelung des Zahnkranzes 13.1 mit der Abtriebswelle 11. Der Trommelteil 13.2 der Riemenscheibe 13 bleibt auf der Abtriebswelle 11 frei drehbar.

In der rechten Hälfte der Fig. 2 ist die dort nicht im Schnitt dargestellte Kupplungsscheibe 24 in ihrer obersten Stellung dargestellt, in welcher ihre Kupplungsvorsprünge 26 in die entsprechenden Kupplungsausnehmungen des Zahnkranzes 12.2 der Riemenscheibe 12 eingreifen und den Zahnkranz 12.1 drehfest mit der Abtriebswelle 11 kuppeln. Auch dort bleibt der Trommelteil 12.2 der Riemenscheibe 12 immer frei drehbar.

In ihrer nicht dargestellten Mittellage, in welcher die Rastnase 30 in die mittlere der drei Rastkerben 29 des Kupplungsträgers 28 einrastet, bleiben beide Zahnkränze 12.1 und 13.1 ausgekuppelt. Beide Riemenscheiben 12 und 13 drehen sich einschließlich ihrer Zahnkränze 12.1, 13.1 frei, und die Abtriebswelle 11 bleibt in Ruhe.

## Patentansprüche

1. Riemenantriebsvorrichtung, beispielsweise für Fadenliefervorrichtungen für Textilmaschinen, mit mindestens einem endlosen angetriebenen Riemen und mindestens einer Abtriebswelle, die mit einer Riemenscheibe kuppelbar ist, über welche der Riemen geführt ist und mit welcher der Riemen gleichzeitig bereichsweise eine formschlüssige und bereichsweise eine nur reibungsschlüssige Verbindung hat, dadurch gekennzeichnet, daß der nur einen Reibungsschluß mit dem Riemen (14, 15) ergebende Bereich (12.2, 13.2) oder diese Bereiche der Riemenscheibe (12, 13) gegenüber dem einen Formschluß mit dem Riemen (14, 15) ergebenden Bereich (12.1, 13.1) oder diesen Bereichen der Riemenscheibe (12, 13) relativverdrehbar ausgebildet ist bzw. sind.

2. Riemenantriebsvorrichtung nach Anspruch 1, bei welcher der Riemen nur auf einem Teil seiner Breite Vorsprünge und/oder Ausnehmungen aufweist, die mit Ausnehmungen oder Vorsprüngen der Riemenscheiben formschlüssig zusammenwirken, dadurch gekennzeichnet, daß der die Ausnehmungen und/oder Vorsprünge aufweisende Breitenbereich einer jeden abtriebsseitigen Riemenscheibe (12, 13) mit der zugehörigen Abtriebswelle (11) drehfest kuppelbar ist, während mindestens ein benachbarter, mit einer glatten Anlagefläche für den gleichen Riemen (14, 15) versehener Breitenbereich der Riemenscheibe (12, 13) koaxial frei drehbar gelagert ist.

3. Riemenantriebsvorrichtung nach Anspruch 1 oder 2, dadurch gekennzeichnet, daß der Antriebsriemen (14, 15) mindestens an einem seiner Längsränder eine durch regelmäßig angeordnete Randeinkerbungen (16) gebildete Verzahnung aufweist, die in einen mit einer Abtriebswelle (11) drehfest kuppelbaren, den Rand einer Riemenscheibe (12, 13) bildenden Zahnkranz (12.1, 13.1) eingreift, und daß der angrenzende, eine glatte Anlagefläche für den ungezahnten Teil des Antriebsriemens (14, 15) aufweisende koaxiale Teil (12.2, 13.2) der Riemenscheibe (12, 13) ein gesondertes, gegenüber dem Zahnkranz (12.1, 13.1) verdrehbar gelagertes Bauteil bildet.

4. Riemenantriebsvorrichtung nach Anspruch 3, dadurch gekennzeichnet, daß der die glatte Anlagefläche für den Riemen (14, 15) aufweisende Teil (12.2, 13.2) der Riemenscheibe (12, 13) auf der Abtriebswelle (11) frei drehbar gelagert ist.

5. Riemenantriebsvorrichtung nach Anspruch 3, dadurch gekennzeichnet, daß der die glatte Anlagefläche für den Riemen (14, 15) aufweisende Teil (12.2, 13.2) der Riemenscheibe (12, 13) auf der Abtriebswelle (11) gebremst drehbar gelagert ist.

6. Riemenantriebsvorrichtung nach einem der Ansprüche 1 bis 5, für Fadenliefervorrichtungen und mit mehreren, wahlweise mit Abtriebswellen koppelbaren randgezahnten Antriebsriemen, die an jeder Abtriebswelle jeweils über eine gesonderte, mittels mindestens einer axialverstellbaren, drehfesten Kupplungsscheibe mit Kupplungsvorsprüngen wahlweise mit der Abtriebswelle kuppelbare Riemenscheibe geführt sind, dadurch gekennzeichnet, daß der mit der Randverzahnung (16) des Antriebsriemens (14, 15) zusammenwirkende Zahnkranz (12.1, 13.1) und der gesonderte, die glatte Riemenanlagefläche bildende Teil (12.2, 13.2) der Riemenscheibe (12, 13) gegeneinander und gegenüber der Abtriebswelle (11) frei drehbar gelagert sind, und daß der Zahnkranz (12.1, 13.1) mit Kupplungsausnehmungen (27) für die Kupplungsvorsprünge (25, 26) von mindestens einer axialverstellbaren, drehfesten Kupplungsscheibe (24) versehen ist.

## Revendications

1. Dispositif d'entraînement à courroie, par exemple pour des dispositifs de fourniture de fil pour des machines textiles, comprenant au moins une courroie sans fin entraînée et au moins un arbre de sortie qui peut être couplé à une poulie sur laquelle la courroie est guidée et avec laquelle la courroie coopère simultanément, dans certaines zones, de manière crabotée et, dans certaines zones, seulement par friction, caractérisé en ce que la zone (12.2, 13.2) ou les zones de la poulie (12, 13) ne produisant qu'une coopération par friction avec la courroie (14, 15) peut ou peuvent effectuer une rotation relative par rapport à la zone (12.1, 13.1) ou aux zones de la poulie (12, 13) assurant une coopération crabotée avec la courroie (14, 15).

2. Dispositif d'en traînement à courroie conforme à la revendication 1, dans lequel la courroie ne comporte que dans une partie de sa largeur des saillies et/ou des évidements qui coopèrent de manière crabotée avec des évidements ou des saillies des poulies, carsatérisé en ce que la zone de largeur de chaque poulie côté sortie (12, 13) comportant les évidements et/ou les saillies peut être liée en rotation avec l'arbre de sortie correspondant (11), tandis qu'au moins une zone de largeur voisine de la poulie (12, 13), munie d'une surface d'appui lisse pour la même courroie (14, 15), est montée coaxialement en libre rotation.

3. Dispositif d'entraînement à courroie conforme à la revendication 1 ou 2, caractérisé en ce que la courroie d'entraînement (14, 15) comporte, au moins sur l'un de ses bords longitudinaux, une denture qui est formée par des entailles latérales disposées régulièrement (16) et qui s'engrène dans une couronne dentée (12.1, 13.1) pouvant être liée en rotation à un arbre de sortie (11) et formant le bord d'une poulie (12, 13), et en ce que la partie adjacente coaxiale (12.2, 13.2) de la poulie (12, 13), qui comporte une surface d'appui lisse pour la partie non dentée de la courroie d'entraînement (14, 15) forme un élément séparé et monté en rotation par rapport à la couronne dentée (12.1, 13.1).

4. Dispositif d'entraînement à courroie conforme à la revendication 3, caractérisé en ce que la partie (12.2, 13.2) de la poulie (12, 13) comprenant la surface d'appui lisse pour la courroie (14, 15) est montée en libre rotation sur l'arbre de sortie (11).

5. Dispositif d'entraînement à courroie conforme à la revendication 3, caractérisé en ce que la partie (12.2, 13.2) de la poulie (12, 13) comportant la surface d'appui lisse pour la courroie (14, 15) est montée en rotation et freinée sur l'arbre de sortie (11).

6. Dispositif d'entraînement à courroie conforme à l'une des revendications 1 à 5, destiné à des dispositifs de fourniture de fil et comprenant plusieurs courroies d'entraînement à denture latérale qui peuvent être couplées sélectivement à des arbres de sortie et qui sont guidées, sur chaque arbre de sortie, par l'intermédiaire d'une poulie séparée pouvant être couplée sélectivement à l'arbre de sortie au moyen d'au moins un disque d'accouplement à saillies d'accouplement lié en rotation et mobile axialement, caractérisé en ce que la couronne dentée (12.1, 13.1) coopérant avec la denture latérale (16) de la courroie d'entraînement (14, 15) et la partie séparée (12.2, 13.2) de la poulie (12, 13) formant la surface d'appui lisse de courroie sont montées en litre rotation l'une par rapport l'autre et par rapport à l'arbre de sortie (11), et en ce que la couronne dentée (12.1, 13.1) est munie d'évidements d'accouplement (27) pour les saillies d'accouplement (25, 26) d'au moins un disque d'accouplement lié en rotation et mobile axialement (24).

## Claims

1. A belt driving device, for example for thread supply devices for textile machinery, having at least one endless driven belt and at least one power driven shaft, which can be coupled with a belt pulley over which the belt is conducted and with which the belt has simultaneously regionally a form-locking and regionally an only friction-locking connection, characterised in that the region (12.2, 13.2) resulting in only a frictional locking with the belt (14, 15) or these regions of the belt pulley (12, 13) is or respectively are designed so as to be relatively rotatable relative to the region (12.1, 13.1) resulting in a form-locking with the belt (14, 15) or these regions of the belt pulley (12, 13).

2. A belt driving device according to claim 1, in which the belt has only on a part of its width projections and/or recesses which co-operate in form-locking manner with recesses or projections of the belt pulleys, characterised in that that width region of each power driven-sided belt pulley (12, 13) which has the recesses and/or projections can be coupled in a torsionally-fast manner with the associated power driven shaft (11), whilst at least one adjacent width region of the belt pulley (12, 13) which is provided with a smooth abutment surface for the same belt (14, 15) is mounted so as to be coaxially freely rotatable.

3. A belt driving device according to claim 1 or 2, characterised in that the driving belt (14, 15) has at least at one of its longitudinal edges a toothing which is formed by uniformly arranged edge indentations (16) and which engages into a toothed rim (12.1, 13.1) which can be coupled in a torsionally-fast manner with a power driven shaft (11) and which forms the edge of a belt pulley (12, 13), and in that that adjoining coaxial part (12.2, 13.2) of the belt pulley (12, 13) which has a smooth abutment surface for the non-toothed part of the driving belt (14, 15) forms a separate component which is mounted so as to be rotatable relative to the toothed rim (12.1, 13.1).

4. A belt driving device according to claim 3, characterised in that that part (12.2, 13.2) of the belt pulley (12, 13) which has the smooth abutment surface for the belt (14, 15) is mounted so as to be freely rotatable on the power-take-off shaft (11).

5. A belt driving device according to claim 3, characterised in that that part (12.2, 13.2) of the belt pulley (12, 13) which has the smooth abutment surface for the belt (14, 15) is mounted so as to be brakedly rotatable on the power-take-off shaft (11).

6. A belt driving device according to one of claims 1 to 5, for thread supply devices and having several edgetoothed driving belts which can be coupled optionally with power driven shafts and which at each power driven shaft are conducted respectively over a separate belt pulley which can be coupled by means of at least one axially-displaceable torsionally-fast clutch disc having coupling projections optionally with the power driven shaft, characterised in that the toothed rim (12.1, 13.1) go-operating with the edge toothing (16) of the driving belt (14, 15) and the separate part (12.2, 13.2), forming the smooth belt abutment surface, of the belt pulley (12, 13) are mounted so as to be freely rotatable mutually and relative to the power driven shaft (11), and in that the toothed rim (12.1, 13.1) is provided with coupling recesses (27) for the coupling projections (25, 26) of at least one axially-displaceable torsionally-fast clutch disc (24).

EP 0 228 542 B1

Fig. 1

Fig. 2